# EUROPÄISCHE PATENTSCHRIFT

(11) **EP 2 586 544 B1**
(45) Veröffentlichungstag und Bekanntmachung des Hinweises auf die Patenterteilung: **18.06.2014**
(21) Anmeldenummer: 12189750.8
(22) Anmeldetag: 24.10.2012
(51) Int. Cl.: B21D 55/00, B21D 5/02, B21D 43/26, F16P 3/12, F16P 3/14

(54) **Werkzeugmaschine mit einer Anschlagvorrichtung und Verfahren zum Betrieb der Werkzeugmaschine**
Machine tool with a limit stop device and method for operating the machine tool
Machine-outil avec un dispositif de butée et procédé de fonctionnement de la machine-outil

(30) Priorität: 25.10.2011 AT 15582011
(43) Veröffentlichungstag der Anmeldung: 01.05.2013
(73) Patentinhaber: Trumpf Maschinen Austria GmbH & CO. KG., 4061 Pasching (AT)
(72) Erfinder: Angerer, Gerhard, 4203 Altenberg (AT); Freudenthaler, Klemens, 4020 Linz (AT); Gaggl, Josef, 4400 Steyr (AT); Hörl, Matthias, 6372 Oberndorf/Tirol (AT); Mayrhofer, Johann, 4542 Nussbach (AT); Strasser, Hagen, 4061 Pasching (AT); Theis, Helmut, 4540 Pfarrkirchen (AT); Weiss, Thomas, 4020 Linz (AT)
(74) Vertreter: Burger, Hannes

(56) Entgegenhaltungen:
- EP-B1- 2 043 795
- JP-A- 3 042 133
- JP-A- 7 275 950

## Beschreibung

Die Erfindung betrifft ein Verfahren zum Betrieb einer Werkzeugmaschine mit einer Anschlagvorrichtung zum Positionieren eines Werkstücks in einem Bearbeitungsbereich der Werkzeugmaschine. Bei dem Verfahren wird zumindest ein Anschlagfinger der Anschlagvorrichtung mittels einer Verfahrvorrichtung entlang einer Bewegungsbahn nach vor in Richtung zum Bearbeitungsbereich in eine Anschlagposition bewegt. Dabei wird mittels einer Überwachungsvorrichtung kontinuierlich überprüft wird, ob sich ein Hindernis in der Bewegungsbahn des zumindest einen Anschlagfingers befindet und es wird von der Überwachungsvorrichtung eine Schutzfunktion ausgelöst, wenn ein solches Hindernis erfasst wird. Weiterhin wird eine Werkzeugmaschine zur Umsetzung des Verfahrens angegeben.

Beispielsweise durch die fehlerhafte Vorgabe der Sollposition eines Anschlagfingers der Anschlagvorrichtung oder durch Unachtsamkeit eines Bedieners kann es zu Kollisionen des Anschlagfingers mit einem Teil der Werkzeugmaschine oder sogar mit dem Bediener kommen. Solche Kollisionen können zu Beschädigungen an der Werkzeugmaschine und im schlimmsten Fall zu Verletzungen des Bedieners führen.

Um Beschädigungen und Verletzungen vorzubeugen, wird als häufige Gegenmaßnahme die Verfahrgeschwindigkeit des Anschlagfingers reduziert, sodass mehr Zeit für eine Reaktion auf eine Gefahrensituation bleibt. Insbesondere ist eine solche Geschwindigkeitsreduktion zumindest im Nahbereich einer Quetsch- oder Scherstelle, vorzugsweise in einem Abstand von 50 mm und weniger, vorgesehen. Durch die Reduktion der Verfahrgeschwindigkeit wird jedoch auch die Taktzykluszeit für einen Arbeitsprozess der Werkzeugmaschine, bei der die Anschlagvorrichtung bzw. der Anschlagfinger während des Prozesses verstellt werden muss, verlängert und damit die Produktionsgeschwindigkeit verringert.

Eine weitere bekannte Sicherheitsmaßnahme ist, die Bewegung des Anschlagfingers der Anschlagvorrichtung kontinuierlich zu überwachen und den Anschlagfinger beim Auftreffen auf ein Hindernis zu stoppen oder seine Bewegungsrichtung umzukehren, indem das Antriebsmittel des Anschlagfingers entsprechend angesteuert wird. Da zum sicheren Stoppen oder zur möglichst schnellen Umkehrung der Bewegungsrichtung des Anschlagfingers im Gefahrenfall eine Verfahrvorrichtung mit einer höhere Dynamik als für den Normalbetrieb nötig ist, muss das Antriebsmittel der Verfahrvorrichtung für einen solchen Fall entsprechend stärker und robuster ausgeführt werden. Diese Auslegung der Verfahrvorrichtung für den Gefahrenfall hat eine Überdimensionierung und damit Effizienzreduktion für den Normalbetrieb der Werkzeugmaschine zur Folge.

Aus der JP 7-275950 A ist ein Anschlagfinger für eine Biegemaschine bekannt, welcher im Bedarfsfall, beispielsweise wenn ein Werkstück aufgrund seiner Abmessungen nicht bzw. nur auf relativ umständliche Art und Weise im Bearbeitungsbereich der Biegemaschine positioniert werden kann, durch einen Aktor hochgezogen und zurückgeklappt wird. Vor der Durchführung der Biegeoperation wird der Anschlagfinger vom Aktor wieder in seine Position gebracht, sodass er als Anschlagvorrichtung dienen kann. Ein Bewegen des Anschlagfingers entlang einer Bewegungsbahn nach vor und insbesondere auch zurück ist nicht vorgesehen. Ebenso ist es nicht vorgesehen, den Anschlagfinger beim Auftreten einer Gefahrensituation im Zusammenhang mit dem Anschlagfinger zurückzuklappen.

Der vorliegenden Erfindung liegt die Aufgabe zugrunde, ein Verfahren zum Betrieb einer Werkzeugmaschine mit einer Anschlagvorrichtung zu schaffen, mit dem Beschädigungen und Verletzungen vermieden werden und zugleich die Effizienz der Werkzeugmaschine durch die dazu nötigen Schutzmaßnahmen nicht reduziert wird. Darüber hinaus ist es eine Aufgabe der Erfindung, eine Werkzeugmaschine mit einer Anschlagvorrichtung zu schaffen, mit welcher die genannten Aufgabenstellungen gelöst werden.

Die erstgenannte Aufgabe der Erfindung wird mit einem Verfahren der eingangs genannten Art gelöst, bei dem durch die Ausführung der Schutzfunktion ein schnelles Freifahren bzw. Rückziehen des zumindest einen Anschlagfingers und dessen Verfahrvorrichtung entlang der Bewegungsbahn zurück, vom Bearbeitungsbereich weg bewirkt wird und wobei die Kraft für die Rückzugsbewegung über eine Rückzugsvorrichtung bereitgestellt wird, welche von der Verfahrvorrichtung unabhängig ausgebildet ist und die schnelle Rückzugsbewegung in genau eine Richtung ausführen kann.

Auf diese Weise werden Kollisionen des zumindest einen Anschlagfingers mit einem Hindernis und damit Beschädigungen der Werkzeugmaschine bzw. Verletzungen eines Bedieners aktiv verhindert und nicht nur die Reaktionszeit bis zur Kollision verlängert. Darüber hinaus ist es besonders vorteilhaft, die Verfahrvorrichtung, mit welcher der zumindest eine Anschlagfinger im Normalbetrieb entlang der Bewegungsbahn bzw. Bewegungsachse vor- und zurückbewegt wird und die Rückzugsvorrichtung, mit welcher der zumindest eine Anschlagfinger und dessen Verfahrvorrichtung beim Erfassen eines Hindernisses entlang der Bewegungsbahn zurück, vom Bearbeitungsbereich weg bewegt wird, zu entkoppeln. Dadurch ist es möglich, beide Vorrichtungen optimal auf ihre jeweiligen Anforderungen abzustimmen. Bei der Verfahrvorrichtung steht dabei die exakte, insbesondere CNC-unterstützte Positionierung des zumindest einen Anschlagfingers und dessen Bewegbarkeit in beide Richtungen entlang der Bewegungsbahn im Mittelpunkt des Interesses. Bei der Rückzugsvorrichtung ist eine schnell und hochdynamische Bewegbarkeit des zumindest einen Anschlagfingers entlang der Bewegungsbahn in eine Richtung, nämlich vom Bearbeitungsbereich weg, von zentraler Bedeutung. Weiters ist durch das Freifahren bzw. Rückziehen des zumindest einen Anschlagfingers zusammen mit dessen Verfahrvorrichtung, welche mit dem zumindest einen Anschlagfinger wirkverbunden ist, ein einfacher und robuster Aufbau der Verfahrvorrichtung und der gesamten Anschlagvorrichtung sichergestellt.

Günstig ist es, wenn der zumindest eine Anschlagfinger von der Verfahrvorrichtung nach vor in Richtung zum Bearbeitungsbereich mit normaler Verfahrgeschwindigkeit, insbesondere mit mehr als 2 m/min, bewegt wird. Auf diese Weise werden die Taktzykluszeiten eines Bearbeitungsprozesses der Werkzeugmaschine im Vergleich zu Sicherheitslösungen, welche eine verringerte Verfahrgeschwindigkeit des zumindest einen Anschlagfingers erfordern, nicht verlängert. In diesem Zusammenhang ist zu bemerken, dass auch die Bewegung des zumindest einen Anschlagfingers zurück, vom Bearbeitungsbereich weg mit normaler Verfahrgeschwindigkeit ausgeführt wird.

Günstig ist es auch, wenn bei dem schnelle Freifahren bzw. Rückziehen des zumindest einen Anschlagfingers und dessen Verfahrvorrichtung innerhalb einer der menschlichen Reaktionszeit bei Reflexbewegungen entsprechenden Zeitspanne, vorzugsweise innerhalb von 100 ms, insbesondere innerhalb von 75 ms, der zumindest eine Anschlagfinger und dessen Verfahrvorrichtung mindestens 5 mm, vorzugsweise mindestens 10 mm, insbesondere mindestens 25 mm vom Bearbeitungsbereich weg bewegt wird. Dadurch ist ein ausreichend hohe Dynamik der Rückzugsvorrichtung gegeben, um Beschädigungen und Verletzungen zuverlässig verhindern zu können.

Besonders günstig ist es zudem, wenn die Kraft für die Rückzugsbewegung mittels zumindest eines pneumatischen Muskels, der wahlweise mit einer Rückstellfeder ausgestattet ist, bereitgestellt wird. Ein pneumatischer Muskel umfasst ein druckfestes Schlauchelement aus einem hochfesten Gewebe. Wird das Schlauchelement mit Druckluft beaufschlagt, so dehnt es sich in Querrichtung aus und zieht sich in Längsrichtung zusammen, wobei der Arbeitshub entlang der Längsrichtung genutzt wird. Durch die geringe Masse eines pneumatischen Muskels und des dadurch gegebenen sehr großen Kraft-Gewicht-Verhältnisses sind sehr hohe Beschleunigungswerte von bis zu 50 m/s² erreichbar. Gleichzeitig ist durch die kleinen Abmessungen eines pneumatischen Muskels eine platzsparende Rückzugsvorrichtung ausbildbar.

Eine Kombination des zumindest einen pneumatischen Muskels mit einer Rückstellfeder hat den Vorteil, dass die durch eine Rückzugsbewegung bewegten Teile der Werkzeugmaschine, insbesondere der zumindest eine Anschlagfinger und dessen Verfahrvorrichtung, auf passive Art und Weise wieder in ihrer Ursprungsstellung vor der Rückzugsbewegung zurückbewegt werden, wenn der pneumatische Muskel deaktiviert worden ist. Natürlich kann eine solche Rückstellfeder auch bei anders aufgebauten Rückzugsvorrichtungen ohne einen pneumatischen Muskel eingesetzt werden.

Vorteilhaft ist es, wenn ein Vorhandensein eines Hindernisses von der Übeiwachungsvorrichtung durch kontinuierliches Messen einer Gegenkraft auf den zumindest einen Anschlagfinger und durch Vergleichen der gemessenen Gegenkraft mit einem vordefinierten, die maximal zulässige Gegenkraft darstellenden Schwellwert festgestellt wird. Durch diese Maßnahmen ist sichergestellt, dass die Schutzfunktion nur beim Auftreffen des Anschlagfingers auf ein unbewegliches Hindernis ausgeführt wird und somit die Anzahl der Fehlauslösungen der Schutzfunktion minimiert wird. Durch den vorab definierbaren Schwellwert ist eine flexible Anpassung der Werkzeugmaschine an unterschiedliche Rahmenbedingungen und Sicherheitsnormen möglich.

Vorteilhaft ist es auch, wenn die Gegenkraft mit zumindest einem Kraftmesselement am oder im zumindest einen Anschlagfinger erfasst wird und/oder wenn die Gegenkraft durch Auswertung des Istwerts einer Verstellkraft in einem Kraftregelkreis der Verfahrvorrichtung erfasst wird, welche Verfahrvorrichtung den zumindest einen Anschlagfinger mit Hilfe des Kraftregelkreises bewegt. Durch diese Maßnahmen ist die genaue und zuverlässige Bestimmung der Gegenkraft auf den zumindest einen Anschlagfinger auf einfache Art und Weise sichergestellt.

Günstig ist es, wenn die Gegenkraft durch Erfassen des Drucks bzw. Druckanstiegs im zumindest einen pneumatischen Muskel mit zumindest einem Drucksensor und wahlweise durch zusätzliches Erfassen des zurückgelegten Weges bzw. der Position des zumindest einen Anschlagfingers mit zumindest einem Weg- bzw. Positionssensor und durch Berechnen der Gegenkraft aus diesen erfassten Daten bestimmt wird. Bei einer solchen Ausgestaltung sind keine Sensorelement zur Kraftmessung am oder im zumindest einen Anschlagfinger nötig. Darüber hinaus werden auf diese Weise die Gegenkräfte auf alle vom pneumatischen Muskel bewegten Teile der Werkzeugmaschine bis zum zumindest einen Anschlagfinger hin mit überwacht. Durch die Auswertung der Daten zumindest eines Weg- bzw. Positionssensors, der den zurückgelegten Weg bzw. die Position des zumindest einen Anschlagfingers feststellt, kann das Auslösen der Schutzfunktion noch besser angepasst werden. Beispielsweise kann damit ein Ausführen der Schutzfunktion bei einem komplett zurückgezogenen Anschlagfinger unterbunden werden.

Günstig ist es auch, wenn der Schwellwert, welchen die Gegenkraft zumindest erreichen muss, damit die Schutzfunktion ausgelöst wird, auf einen Wert von 150 N festgelegt ist. Diese Einstellung stellt einen guten Kompromiss zur Vermeidung von Fehlauslösungen der Schutzfunktion einerseits und der Vermeidung von Verletzungen und Beschädigungen andererseits dar.

Vorteilhaft ist es, wenn die Schutzfunktion vor dem Erreichen des Schwellwerts ausgelöst wird, da dadurch ein Überschreiten der maximalen Gegenkraft auf den zumindest einen Anschlagfinger während des Bremsvorganges, Richtungswechsels und Beschleunigungsvorgangs in die entgegengesetzte Richtung verhindert wird.

Von Vorteil ist es in diesem Zusammenhang, wenn die Schutzfunktion beim Auftreten einer Gegenkraft von zumindest 90 % des Schwellwerts, insbesondere von zumindest 95 % des Schwellwerts ausgelöst wird. Durch diese Maßnahmen ist sichergestellt, dass während der Zeit, in der die Bewegungsrichtung des zumindest einen Anschlagfingers umgekehrt wird und sich somit der zumindest eine Anschlagfinger geringfügig noch nach vor in Richtung zum Bearbeitungsbereich bewegt, die durch den Schwellwert definierte maximale Gegenkraft auf den zumindest einen Anschlagfinger nicht überschritten wird.

Die Aufgabe der Erfindung, insbesondere die zweite genannte Aufgabe der Erfindung, wird eigenständig auch durch eine Werkzeugmaschine mit einer Anschlagvorrichtung zum Positionieren eines Werkstücks in einem Bearbeitungsbereich gelöst, welche Anschlagvorrichtung zumindest einen Anschlagfinger umfasst, der auf einem Fingerträger beweglich angeordnet ist und mittels eines Antriebsmittels einer Verfahrvorrichtung entlang einer Bewegungsbahn nach vor und zurück bewegbar ist. Das Antriebsmittel ist dabei fix mit dem Fingerträger verbunden. Weiters umfasst die Werkzeugmaschine eine Überwachungsvorrichtung, mit der während einer Bewegung des zumindest einen Anschlagfingers entlang der Bewegungsbahn nach vor in Richtung zum Bearbeitungsbereich in eine Anschlagposition kontinuierlich überprüfbar ist, ob sich ein Hindernis in der Bewegungsbahn des zumindest einen Anschlagfingers befindet. Ist dies der Fall, so ist von der Überwachungsvorrichtung eine Schutzfunktion auslösbar, da ein Rückzugsaktor einer Rückzugsvorrichtung direkt oder indirekt mit dem entlang der Bewegungsbahn beweglichen Fingerträger wirkverbunden ist. Somit ist als Schutzfunktion ein schnelles Freifahren bzw. Rückziehen des zumindest einen Anschlagfingers und dessen Verfahrvorrichtung entlang der Bewegungsbahn zurück, vom Bearbeitungsbereich weg ausführbar, indem der Rückzugsaktor den Fingerträger und damit den zumindest einen Anschlagfinger und dessen Verfahrvorrichtung vom Bearbeitungsbereich weg bewegt, wobei für den Rückzugsaktor die schnelle Rückzugsbewegung nur in diese Richtung ausführbar ist.

Auf diese Weise werden Kollisionen des zumindest einen Anschlagfingers mit einem Hindernis und damit Beschädigungen der Werkzeugmaschine bzw. Verletzungen eines Bedieners aktiv verhindert und nicht nur die Reaktionszeit bis zur Kollision verlängert. Darüber hinaus ist es besonders vorteilhaft, die Verfahrvorrichtung, mit welcher der zumindest eine Anschlagfinger im Normalbetrieb entlang der Bewegungsbahn bzw. Bewegungsachse mittels des Antriebsmittels vor- und zurückbewegt wird und die Rückzugsvorrichtung, mit welcher der zumindest eine Anschlagfinger und dessen Verfahrvorrichtung beim Erfassen eines Hindernisses mittels des Rückzugsaktors entlang der Bewegungsbahn zurück, vom Bearbeitungsbereich weg bewegt wird, zu entkoppeln. Dadurch ist es möglich, beide Vorrichtungen und insbesondere das Antriebsmittel der Verfahrvorrichtung bzw. den Rückzugsaktor der Rückzugsvorrichtung optimal auf ihre jeweiligen Anforderungen abzustimmen. Bei der Verfahrvorrichtung und insbesondere bei dessen Antriebsmittel steht dabei die exakte, insbesondere CNC-unterstützte Positionierung des zumindest einen Anschlagfingers und dessen Bewegbarkeit in beide Richtungen entlang der Bewegungsbahn im Mittelpunkt des Interesses. Bei der Rückzugsvorrichtung und insbesondere bei dessen Rückzugsaktor ist eine schnell und hochdynamische Bewegbarkeit des zumindest einen Anschlagfingers entlang der Bewegungsbahn in eine Richtung, nämlich vom Bearbeitungsbereich weg, von zentraler Bedeutung. Weiters ist durch das Freifahren bzw. Rückziehen des beweglichen Fingerträgers und damit des zumindest einen Anschlagfingers zusammen mit dessen Verfahrvorrichtung, welche mit dem zumindest einen Anschlagfinger wirkverbunden ist, ein einfacher und robuster Aufbau der Verfahrvorrichtung und der gesamten Anschlagvorrichtung sichergestellt.

Vorteilhaft ist es, wenn die Überwachungsvorrichtung zur Erfassung eines Hindernisses zumindest ein am zumindest einen Anschlagfinger angeordnetes Sensorelement, insbesondere einen mechanisch betätigbaren Kontaktschalter oder einen berührungslos wirkenden Näherungssensor, umfasst. Bei dieser Ausgestaltung ist eine sofortige Auslösung der Schutzfunktion bei einem Kontakt des zumindest einen Anschlagfingers mit einem Hindernis sichergestellt, wobei dabei nur eine sehr geringe Gegenkraft am zumindest einen Anschlagfinger auftritt.

Besonders vorteilhaft ist es, wenn die Rückzugsvorrichtung zur Aufbringung von wenigstens einem Teil der Kraft für die Rückzugsbewegung zumindest einen pneumatischen Muskel umfasst. Durch die geringe Masse eines pneumatischen Muskels und des dadurch gegebenen sehr großen Kraft-Gewicht-Verhältnisses sind sehr hohe Beschleunigungswerte von bis zu 50 m/s² erreichbar. Gleichzeitig ist durch die kleinen Abmessungen eines pneumatischen Muskels eine platzsparende Rückzugsvorrichtung ausbildbar.

Vorteilhaft ist es auch, wenn der zumindest eine pneumatische Muskel der Rückzugsvorrichtung mit einer Rückstellfeder ausgestattet ist. Durch diese Ausgestaltung werden die durch eine Rückzugsbewegung bewegten Teile der Werkzeugmaschine, insbesondere der zumindest eine Anschlagfinger und dessen Verfahrvorrichtung, auf passive Art und Weise wieder in ihrer Ursprungsstellung vor der Rückzugsbewegung zurückbewegt, wenn der pneumatische Muskel deaktiviert worden ist. Natürlich kann eine solche Rückstellfeder auch bei anders aufgebauten Rückzugsvorrichtungen ohne einen pneumatischen Muskel eingesetzt werden.

Günstig ist es auch, wenn die Rückzugsvorrichtung zur Aufbringung von wenigstens einem Teil der Kraft für die Rückzugsbewegung zumindest einen pyrotechnischen Aktor umfasst, der insbesondere nur für eine einmalige Verwendung ausgelegt ist. Solche pyrotechnisch funktionierenden Rückzugsaktoren haben den Vorteil, dass mit ihnen sehr kleine Reaktionszeiten bis zum Beginn des Rückziehens des Anschlagfingers, insbesondere von wenigen Millisekunden, realisierbar sind. Weiters benötigen pyrotechnische Aktoren keine externe Versorgung mit Energie bzw. einem Wirkmedium wie beispielsweise Druckluft und sind somit sehr einfach verwendbar und ansteuerbar.

Günstig ist es, wenn die Überwachungsvorrichtung eine Messvorrichtung zur kontinuierlichen Messung einer Gegenkraft auf den zumindest einen Anschlagfinger umfasst, sodass ein Vorhandensein eines Hindernisses von der Überwachungsvorrichtung durch Vergleichen der gemessenen Gegenkraft mit einem vordefinierten, die maximal zulässige Gegenkraft darstellenden Schwellwert feststellbar ist. Durch diese Maßnahmen ist sichergestellt, dass die Schutzfunktion nur beim Auftreffen des Anschlagfingers auf ein unbewegliches Hindernis ausgeführt wird und somit die Anzahl der Fehlauslösungen der Schutzfunktion minimiert wird. Durch den vorab definierbaren Schwellwert ist eine flexible Anpassung der Werkzeugmaschine an unterschiedliche Rahmenbedingungen und Sicherheitsnormen möglich.

Günstig ist es in diesem Zusammenhang, wenn die Messvorrichtung der Überwachungsvorrichtung zumindest ein Kraftmesselement am oder im zumindest einen Anschlagfinger umfasst. Durch diese Ausgestaltung ist die genaue und zuverlässige Bestimmung der Gegenkraft auf den zumindest einen Anschlagfinger auf einfache Art und Weise sichergestellt.

Günstig ist es schließlich, wenn die Messvorrichtung der Überwachungsvorrichtung zur Erfassung des Drucks bzw. Druckanstiegs im zumindest einen pneumatischen Muskel mit zumindest einem Drucksensor und wahlweise zur zusätzlichen Erfassung des zurückgelegten Weges bzw. der Position des zumindest einen Anschlagfingers mit zumindest einem Weg- bzw. Positionssensor ausgestattet ist. Bei einer solchen Ausgestaltung sind keine Sensorelement zur Kraftmessung am oder im zumindest einen Anschlagfinger nötig. Darüber hinaus werden auf diese Weise die Gegenkräfte auf alle vom pneumatischen Muskel bewegten Teile der Werkzeugmaschine bis zum zumindest einen Anschlagfinger hin mit überwacht. Durch die Auswertung der Daten zumindest eines Weg- bzw. Positionssensors, der den zurückgelegten Weg bzw. die Position des zumindest einen Anschlagfingers feststellt, kann das Auslösen der Schutzfunktion noch besser angepasst werden. Beispielsweise kann damit ein Ausführen der Schutzfunktion bei einem komplett zurückgezogenen Anschlagfinger unterbunden werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Schrägansicht einer Biegemaschine mit Anschlagvorrichtungen für Werkstücke;
- Fig. 2: eine teilweise geschnittene Seitenansicht einer ersten Ausführungsform einer Anschlagvorrichtung und einer Rückzugsvorrichtung für eine Biegemaschine; und
- Fig. 3: eine teilweise geschnittene Seitenansicht einer zweiten Ausführungsform einer Anschlagvorrichtung und einer Rückzugsvorrichtung für eine Biegemaschine.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

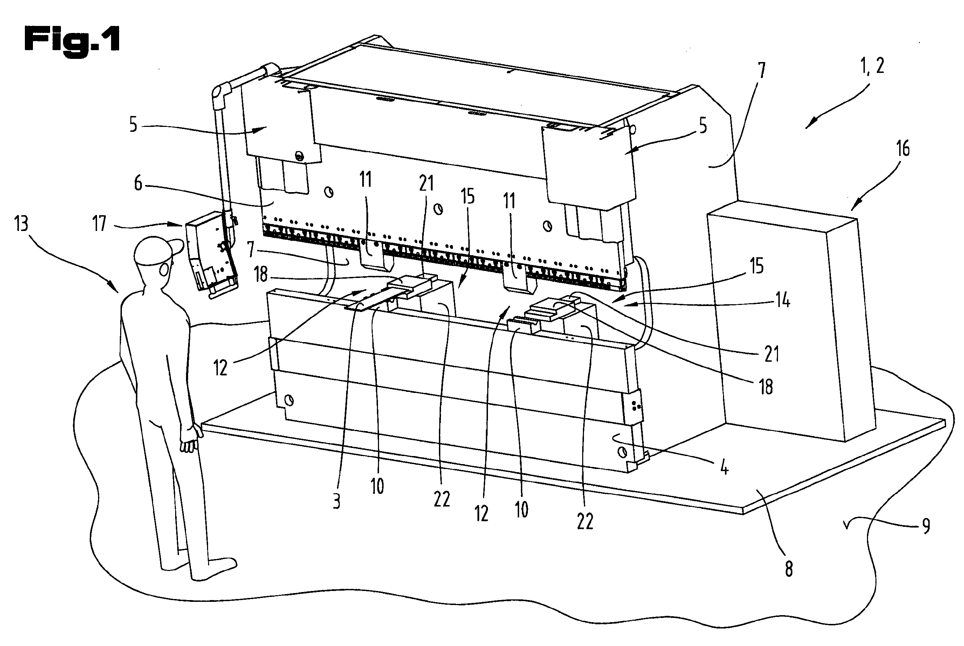

In Fig. 1 ist als ein Ausführungsbeispiel einer Werkzeugmaschine 1 eine Biegemaschine 2 bzw. Abkantpresse zur Durchführung von Biegeumformungen an Werkstücken 3 in einer Schrägansicht gezeigt.

Die Biegemaschine 2 weist einen feststehenden Tischbalken 4 und einen relativ dazu durch Antriebsmittel 5, zum Beispiel in Form von Hydraulikzylindern, in senkrechter Richtung bewegbaren Pressbalken 6 auf. Der Pressbalken 6 ist beweglich an einem Rahmen 7 der Biegemaschine 2 gelagert. Sowohl der Rahmen 7 als auch der Tischbalken 4 der Biegemaschine 2 sind fix auf einem Basiselement 8 angeordnet, welches auf einer Aufstandsfläche 9, beispielsweise einem Boden einer Fertigungshalle, steht.

Auf einer Oberseite des Tischbalkens 4 und einer Unterseite des Pressbalkens 6 sind Biegewerkzeuge wie hier in Form eines Biegegesenks 10 und eines Biegestempels 11 befestigt. Im gezeigten Ausführungsbeispiel sind zwei Paare von jeweils einem Beigegesenk 10 und einem dazu korrespondierenden Biegestempel 11 vorgesehen, wobei es durchaus möglich ist, mehr oder weniger solcher Paare über eine Gesamtlänge des Tischbalkens 4 und des Pressbalkens 6 verteilt anzuordnen, um etwa in Folgeoperationen unterschiedliche Biegevorgänge am Werkstück 3 vornehmen zu können.

Der Bereich über einem Biegegesenk 10 bzw. zwischen einem Biegegesenk 10 und dem dazu korrespondierenden Biegestempel 11 stellt einen Bearbeitungsbereich 12 der Biegemaschine 2 für das Werkstück 3 dar. Damit insbesondere ein Bediener 13 das Werkstück 3 möglichst schnell und richtig im Bearbeitungsbereich 12 positionieren kann, ist in einem Pressenraum 14 der Biegemaschine 2, welcher Pressenraum 14 sich hinter dem Tischbalken 4 befindet, zumindest eine verstellbare Anschlagvorrichtung 15, im dargestellten Ausführungsbeispiel zwei verstellbare Anschlagvorrichtungen 15 in Form von Hinteranschlägen, vorgesehen.

Die Antriebsmittel 5 des Pressbalkens 6 und die Anschlagvorrichtungen 15 werden von einer Steuereinrichtung 16 mit Energie und Steuersignalen versorgt. Zur Bedienung der Biegemaschine 2 durch den Bediener 13 ist insbesondere eine Bedienvorrichtung 17 vorgesehen, über welche der Bediener 13 die Biegemaschine 2 über die Steuereinrichtung 16 steuert und über welche Bedienvorrichtung der Bediener 13 Statusinformationen zum Zustand bzw. den Vorgängen in der Biegemaschine 2 erhält. In diesem Zusammenhang sei auch darauf hingewiesen, dass die Bestückung der Biegemaschine 2 mit Werkstücken 3 auch mit einer nicht gezeigten Werkstück-Handhabungsvorrichtung, wie beispielsweise einem Knickarmroboter, durchgeführt werden kann.

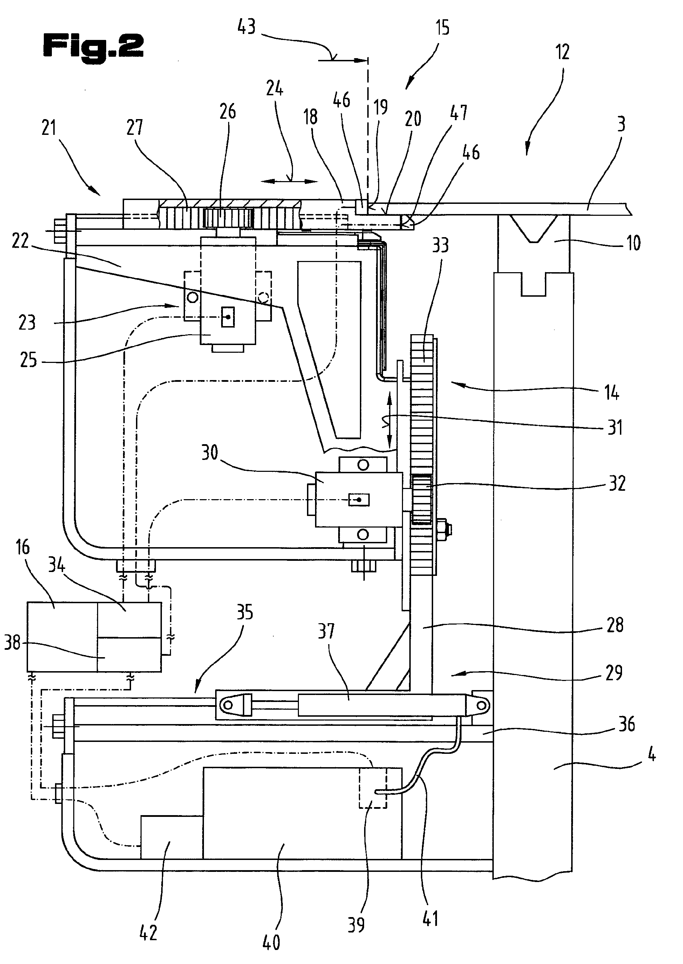

Fig. 2 zeigt eine teilweise geschnittene Seitenansicht einer ersten Ausführungsform einer Anschlagvorrichtung 15 der Biegemaschine 2. Der mögliche Aufbau der Anschlagvorrichtungen 15 in Fig. 1 kann im Detail anhand der Fig. 2 nachvollzogen werden.

Die Anschlagvorrichtung 15 umfasst zumindest einen Anschlagfinger 18, der an seiner vorderen, dem Bearbeitungsbereich 12 der Biegemaschine 2 zugewandten Stirnseite eine Anschlagfläche 19 und wahlweise auch eine Stützfläche 20 für das Werkstück 3 aufweist. Der Anschlagfinger 18 ist über eine Führungsbahn 21 beweglich mit einem Fingerträger 22 der Anschlagvorrichtung 15 verbunden. Aufgrund dieser beweglichen Verbindung ist der Anschlagfinger 18 über eine insbesondere CNC-gesteuerte Verfahrvorrichtung 23 entlang einer im vorliegenden Ausführungsbeispiel horizontalen Bewegungsachse bzw. Bewegungsbahn 24 nach vor, in Richtung zum Bearbeitungsbereich 12, und zurück, vom Bearbeitungsbereich 12 weg, bewegbar.

Um den zumindest einen Anschlagfinger 18 gegenüber dem Fingerträger 22 entlang der Bewegungsbahn 24 bewegen zu können, ist die Verfahrvorrichtung 23 mit einem Antriebsmittel 25, insbesondere mit einem CNC-gesteuerten Servomotor ausgestattet. Das Antriebsmittel 25 ist fix bzw. unbeweglich mit dem Fingerträger 22 verbunden und ist über ein Zahnritzel 26 des Antriebsmittels 25 und eine Zahnstangenanordnung 27 mit dem Anschlagfinger 18 wirkverbunden. Die Zahnstangenanordnung 27 ist dabei fix am Anschlagfinger 18 angeordnet.

Der Fingerträger 22 ist, wie im vorliegenden Ausführungsbeispiel gezeigt, weiters beweglich mit einem Rückzugsschlitten 28 einer Rückzugsvorrichtung 29 der Biegemaschine 2 verbunden. Auf diese Weise ist der Fingerträger 22 über ein zweites fix mit dem Fingerträger 22 verbundenes Antriebsmittel 30 entlang einer vertikalen Bewegungsbahn 31 auf und ab bewegbar. Auch hier ist die Wirkverbindung zwischen dem zweiten Antriebsmittel 30 und dem Rückzugsschlitten 28 über ein Zahnritzel 32 des Antriebsmittels 30 und eine Zahnstangenanordnung 33, welche fix am Rückzugsschlitten 28 angeordnet ist, hergestellt.

Zum Betreiben des ersten Antriebsmittels 25, womit der Anschlagfinger 18 in horizontaler Richtung bewegt wird, und des zweiten Antriebsmittels 30, womit der Fingerträger 22 und damit ebenso der Anschlagfinger 18 in vertikaler Richtung bewegt werden, sind diese Antriebsmittel 25, 30 über elektrische Leitungen mit einer Bewegungs- und Positionssteuerung 34 der Steuereinrichtung 16 verbunden.

Der Rückzugsschlitten 28 der Rückzugsvorrichtung 29 ist seinerseits über eine Führungsbahn 35 in horizontaler Richtung beweglich mit einer Trägervorrichtung 36 der Biegemaschine 2 verbunden und die Trägervorrichtung 36 ist fix am Tischbalken 4 angeordnet. Ebenso ist es möglich, die Trägervorrichtung 36 fix am Basiselement 8 der Biegemaschine 2 anzuordnen. Mittels eines Rückzugsaktors 37, welcher einerseits mit der Trägervorrichtung 36 und andererseits mit dem Rückzugsschlitten 28 verbunden ist, ist der Rückzugsschlitten 28 und damit der Fingerträger 22 zusammen mit dem Antriebsmittel 25 und der Anschlagfinger 18 entlang der horizontalen Bewegungsbahn 24 vom Tischbalken 4 schlagartig nach hinten wegbewegbar, wodurch sich der Anschlagfinger 18 und insbesondere seine Anschlagfläche 19 und eine Stirnfläche 47 des Anschlagfingers 18 entlang der Bewegungsbahn 24 vom Bearbeitungsbereich 12 der Biegemaschine 2 wegbewegen.

Der Rückzugsaktor 37, der in der vorliegenden Ausführungsform als ein Pneumatikzylinder ausgebildet ist, dient dazu, in einem Gefahrenfall den Anschlagfinger 18 möglichst schnell vom Bearbeitungsbereich 12 nach hinten wegzubewegen. Wird von einer Überwachungsvorrichtung 38 der Steuereinrichtung 16 eine Gefahrensituation erfasst, so öffnet diese ein Ventil 39 eines Druckluftbehälters 40 und die darauf schlagartig über eine Leitung 41 in den Zylinder des Rückzugsaktors 37 strömende Druckluft bewegt die Rückzugsvorrichtung 29 und damit die Anschlagvorrichtung 15 mitsamt dem Anschlagfinger 18 entlang der Bewegungsbahn 24 vom Bearbeitungsbereich 12 bzw. dem Tischbalken 4 weg. Die Druckluft im Druckluftbehälter 40 wird mittels eines Kompressors 42 bereitgestellt, welcher zur Energieversorgung und Ansteuerung mit der Steuereinrichtung 16 über eine elektrische Leitung verbunden ist.

Anstatt des Pneumatikzylinders als Rückzugsaktor 37 ist auch ein CNC-gesteuertes Antriebsmittel denkbar, welches für einen schnellen Rückzug in eine Richtung ausgelegt ist. Ebenso ist es möglich, dass die Rückzugsvorrichtung 29 mehrere Rückzugsaktoren 37 umfasst.

Die Biegemaschine 2 in Fig. 1 zeigt zwei Anschlagvorrichtungen 15 in Form von Hinteranschlägen, das Verfahren zum Betrieb einer Werkzeugmaschine 1 mit einer Anschlagvorrichtung 15 kann jedoch auch bereits mit lediglich einer Anschlagvorrichtung 15 oder auch mit mehr als zwei Anschlagvorrichtungen 15 ausgeführt werden. Ebenso ist es möglich, das Verfahren mit anders angeordneten Anschlagvorrichtungen 15 wie beispielsweise mit einem Seitenanschlag auszuführen.

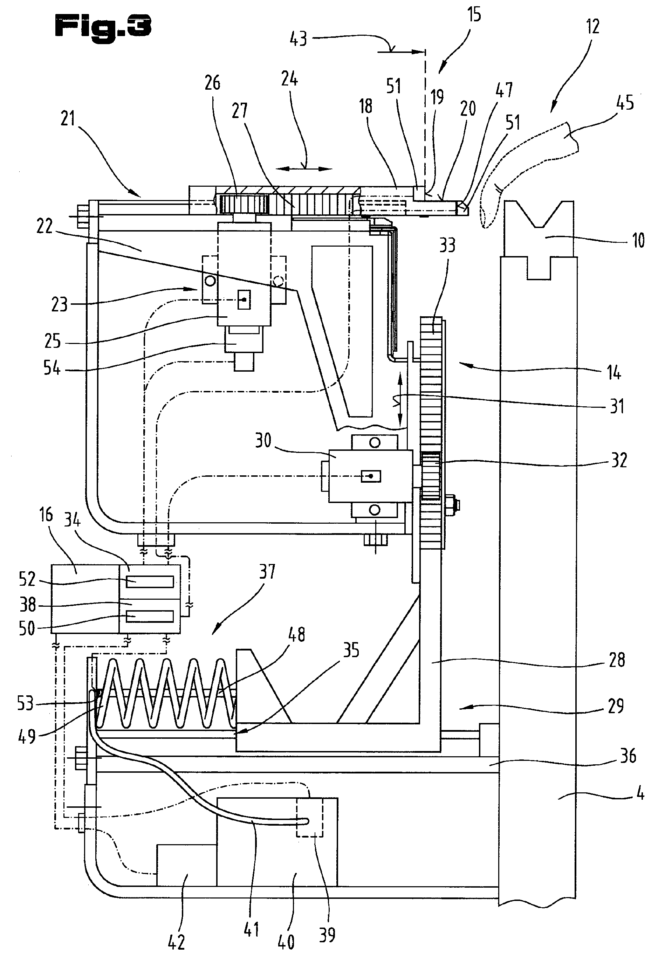

Für einen Umformvorgang wird von einem Bediener 13 von der Vorderseite der Biegemaschine 2 ein Werkstück 3 zwischen das Biegegesenk 10 und den Biegestempel 11 eingelegt, wobei das Werkstück 3 von dem Bediener 13 gegen die Anschlagfläche 19 des Anschlagfingers 18 der Anschlagvorrichtung 15 angeschlagen wird und dadurch das Werkstück 3 eine exakt definierte Position im Bearbeitungsbereich 12 zwischen dem Biegegesenk 10 und dem Biegestempel 11 der Biegemaschine 2 einnimmt. Zuvor wird der zumindest eine Anschlagfinger 18 der Anschlagvorrichtung 15 mittels der Verfahrvorrichtung 23 entlang der Bewegungsbahn 24 in eine vorgesehene Anschlagposition 43 bewegt. Bei einem nach vor Bewegen des zumindest einen Anschlagfingers 18 in Richtung zum Bearbeitungsbereich 12 der Biegemaschine 2 ist es dabei beispielsweise durch die Vorgabe einer falschen Soll-Position für den Anschlagfinger 18 oder durch eine Unachtsamkeit des Bedieners 13 möglich, dass der Anschlagfinger 18 mit einem Hindernis 44, wie beispielsweise dem Biegegesenk 10, kollidiert oder dass ein Hindernis 44, wie beispielsweise ein Finger 45 des Bedieners 13, durch die Bewegung des Anschlagfingers 18 gequetscht wird, wie dies in Fig. 3 beispielhaft veranschaulicht ist. Um eine solche Kollision mit einem Hindernis 44 zu vermeiden, wird mit der Überwachungsvorrichtung 38 kontinuierlich überprüft, ob sich ein solches Hindernis 44 in der Bewegungsbahn 24 des zumindest einen Anschlagfingers 18 befindet. Wird eine Gefahrensituation festgestellt bzw. wird von der Überwachungsvorrichtung 38 ein Hindernis 44 in der Bewegungsbahn 24 erfasst, so wird von der Überwachungsvorrichtung 38 eine Schutzfunktion ausgelöst. Durch die Ausführung der Schutzfunktion wird ein schnelles Freifahren bzw. Rückziehen des zumindest einen Anschlagfingers 18 und dessen Verfahrvorrichtung 23 entlang der Bewegungsbahn 24 zurück, vom Bearbeitungsbereich 12 weg bewirkt. Die Kraft für diese Rückzugsbewegung wird über die Rückzugsvorrichtung 29 bereitgestellt, welche Rückzugsvorrichtung 29 unabhängig von der Verfahrvorrichtung 23 ausgebildet ist und welche Rückzugsvorrichtung 29 die schnelle Rückzugsbewegung in genau eine Richtung ausführen kann.

Grundsätzlich ist es vorgesehen, dass eine Rückzugsvorrichtung 29 eine Anschlagvorrichtung 15 im Gefahrenfall zurückbewegt. Es ist jedoch auch möglich, dass eine Rückzugsvorrichtung 29 mehrere Anschlagvorrichtungen 15 gemeinsam bewegt. Die Kraft, welche vom Rückzugsaktor 37 der Rückzugsvorrichtung 29 aufbringbar ist, muss in diesem Fall zwar erhöht sein, es wird bei einer solchen Ausführung jedoch der Aufwand für weitere Rückzugsvorrichtungen 29 eingespart.

Damit die Überwachungsvorrichtung 38 der Biegemaschine 2 ein Hindernis 44 in der Bewegungsbahn 24 des zumindest einen Anschlagfingers 18 erfassen kann, ist der Anschlagfinger 18, wie im Ausführungsbeispiel gemäß Fig. 2 gezeigt, beispielsweise mit einem oder mehreren Sensorelementen 46 ausgestattet. Im vorliegenden Fall sind die Sensorelemente 46 im Bereich der Anschlagfläche 19 und der Stirnfläche 47 des Anschlagfingers 18 angeordnet und insbesondere als mechanisch betätigbare Kontaktschalter oder als berührungslos wirkende Nährungssensoren ausgebildet. Trifft der Anschlagfinger 18 nun bei einer Bewegung nach vor in Richtung zum Bearbeitungsbereich 12 auf ein Hindernis 44, so melden die Sensorelemente 46 dies über eine elektrische Verbindung, welche auch drahtlos ausgebildet sein kann, an die Überwachungsvorrichtung 38 und diese löst unverzüglich ein Zurückziehen des zumindest einen Anschlagfingers 18 mittels der Rückzugsvorrichtung 29 aus.

Fig. 3 zeigt eine teilweise geschnittene Seitenansicht einer weiteren Ausführungsform einer Anschlagvorrichtung 15 für eine Biegemaschine 2. Der Rückzugsaktor 37 der Rückzugsvorrichtung 29 ist in diesem Fall als ein pneumatischer Muskel 48 ausgeführt. Wird in den pneumatischen Muskel 48 durch Öffnen des Ventils 39 Druckluft über die Leitung 41 eingebracht, so verkürzt sich der pneumatische Muskel 48 entlang seiner Längsrichtung und bewegt somit den Rückzugsschlitten 28 und die damit verbundene Anschlagvorrichtung 15 derart, dass sich der Anschlagfinger 18 entlang der Bewegungsbahn 24 vom Bearbeitungsbereich 12 wegbewegt.

Im Ausführungsbeispiel in Fig. 3 ist der pneumatische Muskel 48 mit einer Rückstellfeder 49 ausgestattet. Nach dem Deaktivieren des pneumatischen Muskels 48 bzw. dem Entweichen der Druckluft aus dem pneumatischen Muskel 48 bewegt die Rückstellfeder 49 auf passive Art und Weise die Rückzugsvorrichtung 29 und damit die Anschlagvorrichtung 15 wieder in ihre Ursprungspositionen zurück.

Im Ausführungsbeispiel nach Fig. 3 wird ein Vorhandensein eines Hindernisses 44 von der Überwachungsvorrichtung 38 durch kontinuierliches Messen bzw. Bestimmen der Gegenkraft auf den zumindest einen Anschlagfinger 18 festgestellt. Überschreitet die gemessene Gegenkraft einen vordefinierten, die maximal zulässige Gegenkraft darstellenden Schwellwert, so löst die Überwachungsvorrichtung 38 die Schutzfunktion und damit das Freifahren bzw. Rückziehen der Anschlagvorrichtung 15 aus. Für die Messung der Gegenkraft ist die Überwachungsvorrichtung 38 mit einer Messvorrichtung 50 ausgestattet.

Zur Messung der Gegenkraft umfasst die Messvorrichtung 50 im gezeigten Ausführungsbeispiel mehrere Kraftmesselemente 51 im Bereich der Anschlagfläche 19 und der Stirnfläche 47 des zumindest einen Anschlagfingers 18. Über eine elektrische Verbindung, welche auch drahtlos ausgeführt sein kann, melden die Kraftmesselemente 51 den Wert der aktuellen Gegenkraft auf den Anschlagfinger 18 an die Messvorrichtung 50 in der Überwachungsvorrichtung 38 der Steuereinrichtung 16.

Weiters erfasst die Messvorrichtung 50 die Gegenkraft auf den Anschlagfinger 18 durch Auswerten des Ist-Werts einer Verstellkraft in einem Kraftregelkreis 52 der Bewegungs- und Positionssteuerung 34 der Steuereinrichtung 16, welche Bewegungs- und Positionssteuerung 34 ein Teil der Verfahrvorrichtung 23 der Anschlagvorrichtung 15 ist. Die Verfahrvorrichtung 23 bewegt den zumindest einen Anschlagfinger 18 mit Hilfe des Kraftregelkreises 52.

Darüber hinaus umfasst die Messvorrichtung 50 zumindest einen Drucksensor 53, der sich im Inneren des pneumatischen Muskels 48 befindet. Mittels des zumindest einen Drucksensors 53 erfasst die Messvorrichtung 50 den Druck bzw. den Druckanstieg im Inneren des pneumatischen Muskels 48. Aus den gewonnenen Daten kann die Überwachungsvorrichtung 38 die aktuelle Gegenkraft, welche auf den zumindest einen Anschlagfinger 18 wirkt, berechnen. Zusätzlich erfasst die Messvorrichtung 50 den zurückgelegten Weg bzw. die Position des zumindest einen Anschlagfingers 18 mit einem Weg- bzw. Positionssensors 54, welcher in Form eines Drehgebers am Antriebsmittel 25 des Anschlagfingers 18 angeordnet ist. Mit Hilfe des Positionssensors 54 ist es möglich, die Bestimmung der aktuellen Gegenkraft auf den Anschlagfinger 18 über die Messvorrichtung 50 und die daraus von der Überwachungsvorrichtung 38 abgeleiteten Reaktionsvorgänge von der aktuellen Position des Anschlagfingers 18 abhängig zu machen.

Es ist möglich, die aktuelle Gegenkraft auf den zumindest einen Anschlagfinger 18 durch genau eine oder durch mehrere der oben beschriebenen Arten zu bestimmen. Bei einer Bestimmung auf mehrere Arten ist die resultierende aktuelle Gegenkraft mittels eines geeigneten Verfahrens wie beispielsweise einer Mittelwertberechnung aus den einzelnen Kraftwerten zu berechnen.

In den in den Fig. 2 und 3 gezeigten Ausführungsbeispielen der Rückzugsvorrichtung 29 und der Anschlagvorrichtung 15 ist das Antriebsmittel 30 zur Höhenverstellung der Anschlagvorrichtung 15 zwischen der Verfahrvorrichtung 23 des Anschlagfingers 18 und der Rückzugsvorrichtung 29 angeordnet. Entsprechend einer alternativen, nicht gezeigten Ausführungsform ist es ebenso möglich, dass die Rückzugsvorrichtung 29 gleich anschließend an die Verfahrvorrichtung 23 angeordnet ist. In einem solchen Fall kann insbesondere der Rückzugsaktor 37 der Rückzugsvorrichtung 29 schwächer dimensioniert werden, da die Rückzugsvorrichtung 29 das Antriebsmittel 30 und die weiteren Komponenten der Höhenverstellungsvorrichtung der Anschlagvorrichtung 15 beim Freifahren nicht mehr mitbewegen muss.

Der Ordnung halber sei abschließend darauf hingewiesen, dass zum besseren Verständnis des Aufbaus der Biegemaschine diese bzw. deren Bestandteile teilweise unmaßstäblich und/oder vergrößert und/oder verkleinert dargestellt wurden.

Die Ausführungsbeispiele zeigen mögliche Ausführungsvarianten der Biegemaschine bzw. Werkzeugmaschine, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen in den Fig. 1; 2; 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Werkzeugmaschine | 36 | Trägervorrichtung |
| 2 | Biegemaschine | 37 | Rückzugsaktor |
| 3 | Werkstück | 38 | Überwachungsvorrichtung |
| 4 | Tischbalken | 39 | Ventil |
| 5 | Antriebsmittel | 40 | Druckluftbehälter |
| | | | |
| 6 | Pressbalken | 41 | Leitung |
| 7 | Rahmen | 42 | Kompressor |
| 8 | Basiselement | 43 | Anschlagposition |
| 9 | Aufstandsfläche | 44 | Hindernis |
| 10 | Biegegesenk | 45 | Finger |
| | | | |
| 11 | Biegestempel | 46 | Sensorelement |
| 12 | Bearbeitungsbereich | 47 | Stirnfläche |
| 13 | Bediener | 48 | Pneumatischer Muskel |
| 14 | Pressenraum | 49 | Rückstellfeder |
| 15 | Anschlagvorrichtung | 50 | Messvorrichtung |
| | | | |
| 16 | Steuereinrichtung | 51 | Kraftmesselement |
| 17 | Bedienvorrichtung | 52 | Kraftregelkreis |
| 18 | Anschlagfinger | 53 | Drucksensor |
| 19 | Anschlagfläche | 54 | Positionssensor |
| 20 | Stützfläche | | |
| | | | |
| 21 | Führungsbahn | | |
| 22 | Fingerträger | | |
| 23 | Verfahrvorrichtung | | |
| 24 | Bewegungsbahn | | |
| 25 | Antriebsmittel | | |
| | | | |
| 26 | Zahnritzel | | |
| 27 | Zahnstangenanordnung | | |
| 28 | Rückzugsschlitten | | |
| 29 | Rückzugssvorrichtung | | |
| 30 | Antriebsmittel | | |
| | | | |
| 31 | Bewegungsbahn | | |
| 32 | Zahnritzel | | |
| 33 | Zahnstangenanordnung | | |
| 34 | Bewegungs- und Positionssteuerung | | |
| 35 | Führungsbahn | | |

## Patentansprüche

1. Verfahren zum Betrieb einer Werkzeugmaschine (1) mit einer Anschlagvorrichtung (15) zum Positionieren eines Werkstücks (3) in einem Bearbeitungsbereich (12), bei welchem Verfahren zumindest ein Anschlagfinger (18) der Anschlagvorrichtung (15) mittels einer Verfahrvorrichtung (23) entlang einer Bewegungsbahn (24) nach vor in Richtung zum Bearbeitungsbereich (12) in eine Anschlagposition (43) bewegt wird und wobei mittels einer Überwachungsvorrichtung (38) kontinuierlich überprüft wird, ob sich ein Hindernis (44) in der Bewegungsbahn (24) des zumindest einen Anschlagfingers (18) befindet und wobei von der Überwachungsvorrichtung (38) eine Schutzfunktion ausgelöst wird, wenn ein solches Hindernis (44) erfasst wird, **dadurch gekennzeichnet, dass** durch die Ausführung der Schutzfunktion ein schnelles Freifahren bzw. Rückziehen des zumindest einen Anschlagfingers (18) und dessen Verfahrvorrichtung (23) entlang der Bewegungsbahn (24) zurück, vom Bearbeitungsbereich (12) weg bewirkt wird und wobei die Kraft für die Rückzugsbewegung über eine Rückzugsvorrichtung (29) bereitgestellt wird, welche von der Verfahrvorrichtung (23) unabhängig ausgebildet ist und die schnelle Rückzugsbewegung in genau eine Richtung ausführen kann.

2. Verfahren nach Anspruch 1, **dadurch gekennzeichnet, dass** der zumindest eine Anschlagfinger (18) von der Verfahrvorrichtung (23) nach vor in Richtung zum Bearbeitungsbereich (12) mit normaler Verfahrgeschwindigkeit, insbesondere mit mehr als 2 m/min, bewegt wird.

3. Verfahren nach Anspruch 1 oder 2, **dadurch gekennzeichnet, dass** bei dem schnelle Freifahren bzw. Rückziehen des zumindest einen Anschlagfingers (18) und dessen Verfahrvorrichtung (23) innerhalb einer der menschlichen Reaktionszeit bei Reflexbewegungen entsprechenden Zeitspanne, vorzugsweise innerhalb von 100 ms, insbesondere innerhalb von 75 ms, der zumindest eine Anschlagfinger (18) und dessen Verfahrvorrichtung (23) mindestens 5 mm, vorzugsweise mindestens 10 mm, insbesondere mindestens 25 mm vom Bearbeitungsbereich (12) weg bewegt wird.

4. Verfahren nach einem der vorhergehenden Ansprüche, **dadurch gekennzeichnet, dass** die Kraft für die Rückzugsbewegung mittels zumindest eines pneumatischen Muskels (48), der wahlweise mit einer Rückstellfeder (49) ausgestattet ist, bereitgestellt wird.

5. Verfahren nach einem der vorhergehenden Ansprüche, **dadurch gekennzeichnet, dass** ein Vorhandensein eines Hindernisses (44) von der Überwachungsvorrichtung (38) durch kontinuierliches Messen einer Gegenkraft auf den zumindest einen Anschlagfinger (18) und durch Vergleichen der gemessenen Gegenkraft mit einem vordefinierten, die maximal zulässige Gegenkraft darstellenden Schwellwert festgestellt wird.

6. Verfahren nach Anspruch 5, **dadurch gekennzeichnet, dass** die Gegenkraft mit zumindest einem Kraftmesselement (51) am oder im zumindest einen Anschlagfinger (18) erfasst wird und/oder dass die Gegenkraft durch Auswertung des Istwerts einer Verstellkraft in einem Kraftregelkreis (52) der Verfahrvorrichtung (23) erfasst wird, welche Verfahrvorrichtung (23) den zumindest einen Anschlagfinger (18) mit Hilfe des Kraftregelkreises (52) bewegt.

7. Verfahren nach Anspruch 4 und 5, **dadurch gekennzeichnet, dass** die Gegenkraft durch Erfassen des Drucks bzw. Druckanstiegs im zumindest einen pneumatischen Muskel (48) mit zumindest einem Drucksensor (53) und wahlweise durch zusätzliches Erfassen des zurückgelegten Weges bzw. der Position des zumindest einen Anschlagfingers (18) mit zumindest einem Weg- bzw. Positionssensor (54) und durch Berechnen der Gegenkraft aus diesen erfassten Daten bestimmt wird.

8. Verfahren nach einem der Ansprüche 5 bis 7, **dadurch gekennzeichnet, dass** der Schwellwert, welchen die Gegenkraft zumindest erreichen muss, damit die Schutzfunktion ausgelöst wird, auf einen Wert von 150 N festgelegt ist.

9. Verfahren nach einem der Ansprüche 5 bis 8, **dadurch gekennzeichnet, dass** die Schutzfunktion vor dem Erreichen des Schwellwerts ausgelöst wird.

10. Verfahren nach Anspruch 9, **dadurch gekennzeichnet, dass** die Schutzfunktion beim Auftreten einer Gegenkraft von zumindest 90 % des Schwellwerts, insbesondere von zumindest 95 % des Schwellwerts ausgelöst wird.

11. Werkzeugmaschine (1) mit einer Anschlagvorrichtung (15) zum Positionieren eines Werkstücks (3) in einem Bearbeitungsbereich (12), welche Anschlagvorrichtung (15) zumindest einen Anschlagfinger (18) umfasst, der auf einem Fingerträger (22) beweglich angeordnet ist und mittels eines Antriebsmittels (25) einer Verfahrvorrichtung (23) entlang einer Bewegungsbahn (24) nach vor und zurück bewegbar ist, wobei das Antriebsmittel (25) fix mit dem Fingerträger (22) verbunden ist, und welche Werkzeugmaschine (1) eine Überwachungsvorrichtung (38) umfasst, mit der während einer Bewegung des zumindest einen Anschlagfingers (18) entlang der Bewegungsbahn (24) nach vor in Richtung zum Bearbeitungsbereich (12) in eine Anschlagposition (43) kontinuierlich überprüfbar ist, ob sich ein Hindernis (44) in der Bewegungsbahn (24) des zumindest einen Anschlagfingers (18) befindet und wobei von der Überwachungsvorrichtung (38) eine Schutzfunktion auslösbar ist, wenn sich ein solches Hindernis (44) in der Bewegungsbahn (24) befindet, **dadurch gekennzeichnet, dass** ein Rückzugsaktor (37) einer Rückzugsvorrichtung (29) direkt oder indirekt mit dem entlang der Bewegungsbahn (24) beweglichen Fingerträger (22) wirkverbunden ist, sodass als Schutzfunktion ein schnelles Freifahren bzw. Rückziehen des zumindest einen Anschlagfingers (18) und dessen Verfahrvorrichtung (23) entlang der Bewegungsbahn (24) zurück, vom Bearbeitungsbereich (12) weg ausführbar ist, indem der Rückzugsaktor (37) den Fingerträger (22) und damit den zumindest einen Anschlagfinger (18) und dessen Verfahrvorrichtung (23) vom Bearbeitungsbereich (12) weg bewegt, wobei für den Rückzugsaktor (37) die schnelle Rückzugsbewegung nur in diese Richtung ausführbar ist.

12. Werkzeugmaschine (1) nach Anspruch 11, **dadurch gekennzeichnet, dass** die Überwachungsvorrichtung (38) zur Erfassung eines Hindernisses (44) zumindest ein am zumindest einen Anschlagfinger (18) angeordnetes Sensorelement (46), insbesondere einen mechanisch betätigbaren Kontaktschalter oder einen berührungslos wirkenden Näherungssensor, umfasst.

13. Werkzeugmaschine (1) nach Anspruch 11 oder 12, **dadurch gekennzeichnet, dass** die Rückzugsvorrichtung (29) zur Aufbringung von wenigstens einem Teil der Kraft für die Rückzugsbewegung zumindest einen pneumatischen Muskel (48) umfasst.

14. Werkzeugmaschine (1) nach Anspruch 13, **dadurch gekennzeichnet, dass** der zumindest eine pneumatische Muskel (48) mit einer Rückstellfeder (49) ausgestattet ist.

15. Werkzeugmaschine (1) nach einem der Ansprüche 11 bis 14, **dadurch gekennzeichnet, dass** die Rückzugsvorrichtung (29) zur Aufbringung von wenigstens einem Teil der Kraft für die Rückzugsbewegung zumindest einen pyrotechnischen Aktor umfasst, der insbesondere nur für eine einmalige Verwendung ausgelegt ist.

16. Werkzeugmaschine (1) nach einem der Ansprüche 11 bis 15, **dadurch gekennzeichnet, dass** die Überwachungsvorrichtung (38) eine Messvorrichtung (50) zur kontinuierlichen Messung einer Gegenkraft auf den zumindest einen Anschlagfinger (18) umfasst, sodass ein Vorhandensein eines Hindernisses (44) von der Überwachungsvorrichtung (38) durch Vergleichen der gemessenen Gegenkraft mit einem vordefinierten, die maximal zulässige Gegenkraft darstellenden Schwellwert feststellbar ist.

17. Werkzeugmaschine (1) nach Anspruch 16, **dadurch gekennzeichnet, dass** die Messvorrichtung (50) zumindest ein Kraftmesselement (51) am oder im zumindest einen Anschlagfinger (18) umfasst.

18. Werkzeugmaschine (1) nach Anspruch 13 oder 14 und Anspruch 16, **dadurch gekennzeichnet, dass** die Messvorrichtung (50) zur Erfassung des Drucks bzw. Druckanstiegs im zumindest einen pneumatischen Muskel (48) mit zumindest einem Drucksensor (53) und wahlweise zur zusätzlichen Erfassung des zurückgelegten Weges bzw. der Position des zumindest einen Anschlagfingers (18) mit zumindest einem Weg- bzw. Positionssensor (54) ausgestattet ist.

## Claims

1. Method for operating a machine tool (1) with a stop device (15) for positioning a workpiece (3) in a processing region (12), with which method at least one stop finger (18) of the stop device (15) is moved forward along a movement path (24) in direction to the processing region (12) into a stop position (43) by means of a travel drive (23), and a monitoring device (38) continuously checks whether there is an obstacle (44) present in the movement path (24) of the at least one stop finger (18), and a protecting function is triggered by the monitoring device (38) if such an obstacle (44) is detected, **characterized in that** a fast relieving or retraction movement of the at least one stop finger (18) and its travel drive (23) along the movement path (24) back, away from the processing region (12) is effected by the execution of the protecting function, and the force for the retraction movement is provided by a retraction device (29) which is embodied independently of the travel drive (23) and can carry out the fast retraction movement in exactly one direction.

2. Method according to claim 1, **characterized in that** the at least one stop finger (18) is moved forward in the direction to the processing region (12) by the travel drive (23) at a normal movement speed, in particular at more than 2 m/min.

3. Method according to claim 1 or 2, **characterized in that** when the at least one stop finger (18) and its travel drive (23) is relieved or retracted within a period corresponding to the human reaction time in case of reflex movements, preferably within 100 ms, in particular within 75 ms, the at least one stop finger (18) and its travel drive (23) is moved at least 5 mm, preferably at least 10 mm, in particular at least 25 mm away from the processing region (12).

4. Method according to one of the preceding claims, **characterized in that** the force for the retraction movement is provided by means of a pneumatic muscle (48) which is optionally provided with a return spring (49).

5. Method according to one of the preceding claims, **characterized in that** the presence of an obstacle (44) is detected by the monitoring device (38) by continuously measuring a counteracting force on the at least one stop finger (18) and by comparing the measured counteracting force with a predefined threshold value which represents the maximum permitted counteracting force.

6. Method according to claim 5, **characterized in that** the counteracting force is determined by at least one force measurement element (51) at or in the at least one stop finger (18) and/or that the counteracting force is determined by evaluating the actual value of an adjustment force in a force control loop (52) of the travel drive (23), which travel drive (23) moves the at least one stop finger (18) by means of the force control loop (52).

7. Method according to claim 4 and 5, **characterized in that** the counteracting force is determined by measuring the pressure or the increase in pressure in at least one pneumatic muscle (48) by means of at least one pressure sensor (53) and optionally by additionally measuring the travelled range or the position of the at least one stop finger (18) by means of at least one range or position sensor (54) and by calculating the counteracting force on the basis of these measured data.

8. Method according to one of claims 5 to 7, **characterized in that** the threshold value which has to be reached by the counteracting force in order to have the protective function triggered, is set at a value of 150 N.

9. Method according to one of claims 5 to 8, **characterized in that** the protective function is triggered before the threshold value is reached.

10. Method according to claim 9, **characterized in that** the protective function is triggered when a counteracting force of at least 90% of the threshold value, in particular of at least 95% of the threshold value, occurs.

11. Machine tool (1) with a stop device (15) for positioning a workpiece (3) in a processing region (12), which stop device (15) comprises at least one stop finger (18) which is moveably arranged on a finger carrier (22) and may be moved forth and back along a movement path (24) by means of a drive means (25) of a travel drive (23), with the drive means (25) being permanently fixed to the finger carrier (22), and which machine tool (1) comprises a monitoring device (38) by means of which it is possible to continuously check whether there is an obstacle (44) in the movement path (24) of the at least one stop finger (18) when the at least one stop finger (18) moves forward along the movement path (24) in direction to the processing region (12) into a stop position (43), and a protective function can be triggered by the monitoring device (38) when there is such an obstacle present in the movement path (24), **characterized in that** a retraction actuator (37) of a retraction device (29) is in direct or indirect operative connection with the finger carrier (22) which can be moved along the movement path (24), so that a fast relieving or retraction movement of the at least one stop finger (18) and its travel drive (23) along the movement path (24) back, away from the processing region (12), can be carried out as a protective function by the retraction actuator (37) moving the finger carrier (22) and thereby the stop finger (18) and its travel drive (23) away from the processing region (12), and it is possible for the retraction actuator (37) to carry out the fast retraction movement in this one direction only.

12. Machine tool (1) according to claim 11, **characterized in that** the monitoring device (38) comprises at least one sensor element (46), in particular a contact switch which can be mechanically operated or a proximity sensor which works in a contactless manner, arranged on the at least one stop finger (18) for detecting an obstacle (44).

13. Machine tool (1) according to claim 11 or 12, **characterized in that** the retraction device (29) comprises a pneumatic muscle (48) for providing at least a part of the force for the retraction movement.

14. Machine tool according to claim 13, **characterized in that** the at least one pneumatic muscle (48) is provided with a return spring (49).

15. Machine tool (1) according to one of claims 11 to 14, **characterized in that** the retraction device (29) comprises at least one pyrotechnic actuator for providing at least a part of the force required for the retraction movement, which pyrotechnic actuator is configured to be used once only.

16. Machine tool (1) according to one of claims 11 to 15, **characterized in that** the monitoring device (38) comprises a measuring device (50) for continuously measuring a counteracting force on the at least one stop finger (18), so that the presence of an obstacle (44) can be detected by the monitoring device (38) by comparing the measured counteracting force with a predefined threshold value which represents the maximum permitted counteracting force.

17. Machine tool (1) according to claim 16, **characterized in that** the measurement device (50) comprises at least one force measuring element (51) at or in the at least one stop finger (18).

18. Machine tool (1) according to claim 13 or 14 and claim 16, **characterized in that** for detecting the pressure or an increase in pressure in the at least one pneumatic muscle (48), the measurement device (50) is equipped with at least one pressure sensor (53) and optionally for additionally detecting the travelled range or the position of the at least one stop finger (18) by means of at least one range or position sensor (54).

## Revendications

1. Procédé de fonctionnement d'une machine-outil (1) avec un dispositif de butée (15) permettant de positionner une pièce à usiner (3) dans une zone de travail (12), dans lequel procédé au moins un doigt de butée (18) du dispositif de butée (15) est déplacé vers l'avant, le long d'une trajectoire de déplacement (24), en direction de la zone de travail (12) jusqu'à une position de butée (43) au moyen d'un dispositif d'avance (23), étant entendu qu'on contrôle en permanence, au moyen d'un dispositif de surveillance (38), si un obstacle (44) se trouve dans la trajectoire de déplacement (24) de l'au moins un doigt de butée (18) et étant entendu qu'une fonction de protection est déclenchée par le dispositif de surveillance (38) si un tel obstacle (44) est détecté, **caractérisé en ce que** sous l'effet de l'exécution de la fonction de protection, un dégagement ou un retrait rapide de l'au moins un doigt de butée (18) et de son dispositif d'avance (23) est opéré le long de la trajectoire de déplacement (24) dans la direction opposée à la zone de travail (12), étant entendu que la force pour le mouvement de retrait est fournie par le biais d'un dispositif de retrait (29) qui est réalisé indépendamment du dispositif d'avance (23) et qui peut exécuter le mouvement de retrait rapide dans précisément une direction.

2. Procédé selon la revendication 1, **caractérisé en ce que** l'au moins un doigt de butée (18) est déplacé vers l'avant en direction de la zone de travail (12) par le dispositif d'avance (23) à une vitesse d'avance normale, en particulier à plus de 2 m/min.

3. Procédé selon la revendication 1 ou 2, **caractérisé en ce que** lors du dégagement ou du retrait rapide de l'au moins un doigt de butée (18) et de son dispositif d'avance (23), l'au moins un doigt de butée (18) et son dispositif d'avance (23) sont déplacés d'au moins 5 mm, de préférence d'au moins 10 mm, et en particulier d'au moins 25 mm à l'opposé de la zone de travail (12) à l'intérieur d'un intervalle de temps correspondant au temps de réaction humain en cas de mouvements réflexes, de préférence en l'espace de 100 ms, et en particulier en l'espace de 75 ms.

4. Procédé selon l'une des revendications précédentes, **caractérisé en ce que** la force pour le mouvement de retrait est fournie au moyen d'au moins un muscle pneumatique (48), qui peut être équipé au choix d'un ressort de rappel (49).

5. Procédé selon l'une des revendications précédentes, **caractérisé en ce qu'**une présence d'un obstacle (44) est constatée par le dispositif de surveillance (38) en mesurant en permanence une force opposée sur l'au moins un doigt de butée (18) et en comparant la force opposée mesurée avec une valeur de seuil prédéfinie constituant la force opposée maximale autorisée.

6. Procédé selon la revendication 5, **caractérisé en ce que** la force opposée est établie avec au moins un élément de mesure de force (51) sur ou dans l'au moins un doigt de butée (18) et/ou **en ce que** la force opposée est établie en analysant la valeur effective d'une force de déplacement dans un circuit de réglage de force (52) du dispositif d'avance (23), lequel dispositif d'avance (23) déplace l'au moins un doigt de butée (18) à l'aide du circuit de réglage de force (52).

7. Procédé selon les revendications 4 et 5, **caractérisé en ce que** la force opposée est déterminée en détectant la pression ou l'augmentation de la pression dans l'au moins un muscle pneumatique (48) avec au moins un capteur de pression (53), et au choix, en détectant en plus le trajet de recul ou la position de l'au moins un doigt de butée (18) avec au moins un capteur de trajet ou de position (54) et en calculant la force opposée à partir de ces données détectées.

8. Procédé selon l'une des revendications 5 à 7, **caractérisé en ce que** la valeur de seuil que la force opposée doit au moins atteindre pour que la fonction de protection soit déclenchée est fixée à une valeur de 150 N.

9. Procédé selon l'une des revendications 5 à 8, **caractérisé en ce que** la fonction de protection est déclenchée avant que la valeur de seuil soit atteinte.

10. Procédé selon la revendication 9, **caractérisé en ce que** la fonction de protection est déclenchée lors de l'apparition d'une force opposée d'au moins 90 % de la valeur de seuil, et en particulier d'au moins 95 % de la valeur de seuil.

11. Machine-outil (1) avec un dispositif de butée (15) permettant de positionner une pièce à usiner (3) dans une zone de travail (12), lequel dispositif de butée (15) comprend au moins un doigt de butée (18) qui est agencé de façon mobile sur un support de doigt (22) et qui peut être déplacé d'avant en arrière le long d'une trajectoire de déplacement (24) au moyen d'un moyen d'entraînement (25) d'un dispositif d'avance (23), étant entendu que le moyen d'entraînement (25) est assemblé de façon fixe avec le support de doigt (22), et laquelle machine-outil (1) comprend un dispositif de surveillance (38) avec lequel on peut contrôler en permanence pendant un déplacement vers l'avant de l'au moins un doigt de butée (18) le long de la trajectoire de déplacement (24), en direction de la zone de travail (12), jusqu'à une position de butée (43) si un obstacle (44) se trouve dans la trajectoire de déplacement (24) de l'au moins un doigt de butée (18), étant entendu qu'une fonction de protection peut être déclenchée par le dispositif de surveillance (38) si un tel obstacle (44) se trouve dans la trajectoire de déplacement (24), **caractérisée en ce qu'**un acteur de retrait (37) d'un dispositif de retrait (29) est assemblé de façon active, directement ou indirectement, avec le support de doigt (22) mobile le long de la trajectoire de déplacement (24) de telle sorte que comme fonction de protection, un dégagement ou un retrait rapide de l'au moins un doigt de butée (18) et de son dispositif d'avance (23) peut être exécuté le long de la trajectoire de déplacement (24) dans la direction opposée à la zone de travail (12) **en ce que** l'acteur de retrait (37) déplace le support de doigt (22), et partant, l'au moins un doigt de butée (18) et son dispositif d'avance (23) à l'opposé de la zone de travail (12), étant entendu que pour l'acteur de retrait (37), le mouvement de retrait rapide peut uniquement être exécuté dans cette direction.

12. Machine-outil (1) selon la revendication 11, **caractérisée en ce que** le dispositif de surveillance (38) comprend, afin de détecter un obstacle (44), au moins un élément de capteur (46) agencé sur l'au moins un doigt de butée (18), en particulier un commutateur à contact pouvant être actionné mécaniquement ou un capteur de proximité fonctionnant sans contact.

13. Machine-outil (1) selon la revendication 11 ou 12, **caractérisée en ce que** le dispositif de retrait (29) comprend au moins un muscle pneumatique (48) afin d'exercer au moins une partie de la force pour le mouvement de retrait.

14. Machine-outil (1) selon la revendication 13, **caractérisée en ce que** l'au moins un muscle pneumatique (48) est équipé d'un ressort de rappel (49).

15. Machine-outil (1) selon l'une des revendications 11 à 14, **caractérisée en ce que** le dispositif de retrait (29) comprend au moins un acteur pyrotechnique, qui est en particulier uniquement conçu pour une utilisation unique, afin d'exercer au moins une partie de la force pour le mouvement de retrait.

16. Machine-outil (1) selon l'une des revendications 11 à 15, **caractérisée en ce que** le dispositif de surveillance (38) comprend un dispositif de mesure (50) afin de mesurer en permanence une force opposée sur l'au moins un doigt de butée (18) de telle sorte qu'une présence d'un obstacle (44) peut être établie par le dispositif de surveillance (38) en comparant la force opposée mesurée avec une valeur de seuil prédéfinie constituant la force opposée maximale autorisée.

17. Machine-outil (1) selon la revendication 16, **caractérisée en ce que** le dispositif de mesure (50) comprend au moins un élément de mesure de force (51) sur ou dans l'au moins un doigt de butée (18).

18. Machine-outil (1) selon la revendication 13 ou 14 et la revendication 16, **caractérisée en ce que** le dispositif de mesure (50) est conçu pour détecter la pression ou l'augmentation de la pression dans l'au moins un muscle pneumatique (48) avec au moins un capteur de pression (53), et au choix, pour détecter en plus le trajet de recul ou la position de l'au moins un doigt de butée (18) avec au moins un capteur de trajet ou de position (54).
